# EUROPEAN PATENT APPLICATION

(11) **EP 4 557 674 A1**
(43) Date of publication of application: **21.05.2025**
(21) Application number: 23838418.4
(22) Date of filing: 27.02.2023
(51) Int. Cl.: H04L 12/28, H04L 67/12, H04L 67/51

(54) **CONTROL METHOD AND APPARATUS, DEVICE, AND STORAGE MEDIUM**

(30) Priority: 15.07.2022 CN 202210835607
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: WENG, Jinlian, Foshan, Guangdong 528311 (CN); ZHANG, Tianyu, Foshan, Guangdong 528311 (CN)
(74) Representative: RGTH
(86) International application number: PCT/CN2023/078534
(87) International publication number: WO 2024/011916

(57) **Abstract**

A control method, a control equipment, a control device and a computer-readable storage medium are provided. The method includes: obtaining target information and target network connection information for activation and binding in response to detecting a device that currently needs to be activated and bound; and sending the target information and the target network connection information to the device. The target network connection information is configured for enabling the device to access a target communication network corresponding to the target network connection information, and the target information is configured for enabling the device to implement activation and binding operation at a service device by the target communication network.

## Description

### CROSS-REFERENCE TO RELATED APPLICATIONS

The present application claims priority to Chinese Patent Application No. 202210835607.6 filed on July 15 2022. The entire disclosures of each of which are incorporated herein by reference.

### TECHNICAL FIELD

The present application relates to the field of communication of information, and in particular, to a control method, a device, an equipment and a storage medium applicable to home appliances.

### BACKGROUND

With the improvement of loT (Internet of Things) technology and the improvement of the living standards of residents, smart home appliances for the whole house have been developed. With the widespread application of smart home appliances for the whole house, the Internet of Everything has gradually been realized, that is, all smart home appliances are connected to the loT and become loT devices. In this way, they can be interconnected and controlled concertedly and uniformly by the loT to provide the residents with improved user experience.

At present, in the process that the loT devices are being connected to the loT to realize binding and activation, a user is usually required to perform corresponding operations on the panel of the loT house appliances or the corresponding remote control device to enter the binding and activation state. However, the operation of this process is relatively complicated and cumbersome, resulting in a low success rate of binding and activation of the loT device, which seriously affects the utilization of the loT function of the loT devices.

### SUMMARY

In order to solve at least the above technical problems, the embodiments of the present application hope to provide a control method, a control device, a control equipment and a storage medium applicable home appliances, which solves the problem of low binding and activation success rate of loT devices, and proposes a method for automatically realizing binding and activation of loT devices. As a result, the binding and activation success rate of loT devices can be improved and the utilization of loT functions of loT devices can be ensured.

The technical solution of the present application can be implemented as follows.

In the first aspect, the embodiments of the present application provide a control method, comprising:
obtaining target information and target network connection information for activation and binding in response to detecting a device that currently needs to be activated and bound; and
sending the target information and the target network connection information to the device; the target network connection information is configured for enabling the device to access a target communication network corresponding to the target network connection information, and the target information is configured for enabling the device to implement activation and binding operation at a service device by the target communication network.

In a second aspect, an embodiment of the present application provides a control equipment, comprising a first acquisition unit and a first transmission unit.

The first acquisition unit is configured for obtaining target information and target network connection information for activation and binding in response to detecting a device that currently needs to be activated and bound.

The first transmission unit is configured for sending the target information and the target network connection information to the device. The target network connection information is configured to enable the device to access a target communication network corresponding to the target network connection information, and the target information is configured to enable the device to implement activation and binding operation at a service device by the target communication network.

In a third aspect, an embodiment of the present application provides a control device, comprising a memory, a processor and a communication bus.

The memory is configured for storing an executable instruction.

The communication bus is configured for implementing a communication connection between the processor and the memory.

The processor is configured for executing a control program stored in the memory to implement the control method as described previously.

In a fourth aspect, an embodiment of the present application provides a computer-readable storage medium, a control program is stored on the storage medium, and the control method as described previously is implemented when the control program is executed by a processor.

In the embodiment of the present application, by obtaining target information and target network connection information for activation binding in response to detecting a device that currently needs to be activated and bound, and sending the target information and the target network connection information to the device, so that after the device automatically accesses the target communication network by the target network connection information, the activation and binding operation is realized at the control device based on the target information. In this way, the control device actively sends the target network connection information and the target information to the detected device, so that the device actively performs activation and binding at the control device, thereby solving at least the problem of low binding activation success rate of loT devices, proposing a method for automatically realizing binding activation of loT devices, improving the binding activation success rate of loT devices, and ensuring the use of loT functions of loT devices.

### BRIEF DESCRIPTION OF THE DRAWINGS

FIG. 1 is a first flowchart of a control method according to an embodiment of the present application.
FIG. 2 is a second flowchart of a control method according to an embodiment of the present application.
FIG. 3 is a third flowchart of a control method according to an embodiment of the present application.
FIG. 4 is a flowchart of an application embodiment of a control method according to an embodiment of the present application.
FIG. 5 is a fourth flowchart of a control method according to an embodiment of the present application.
FIG. 6 is a structural schematic diagram of a control equipment according to an embodiment of the present application.
FIG. 7 is a structural schematic diagram of a control device according to an embodiment of the present application.

### DETAILED DESCRIPTION OF THE EMBODIMENTS

The following will combine the accompanying drawings in the embodiments of the present application to clearly and completely describe the technical solutions in the embodiments of the present application.

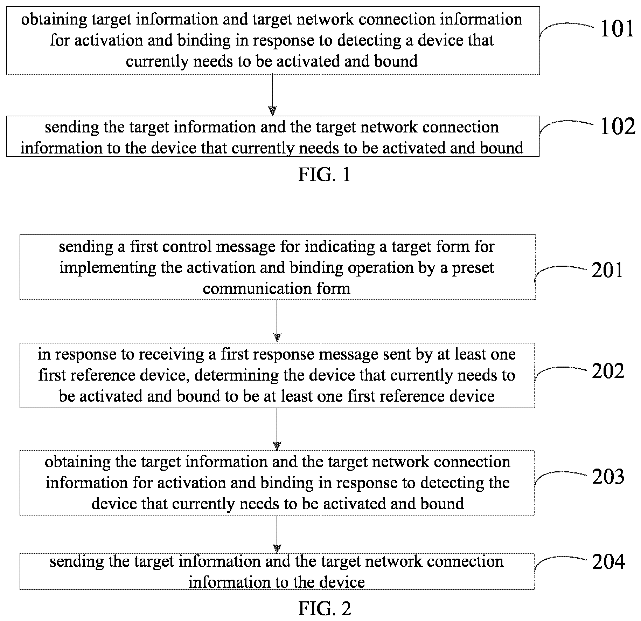

The embodiments of the present application provide a control method, as shown in FIG. 1, the method is applied to a control device, and the method comprises the following steps.

Step 101, obtaining target information and target network connection information for activation and binding in response to detecting a device that currently needs to be activated and bound.

In the embodiments of the present application, the device to be activated and bound is a device that is connected to the loT for the first time, such as a smart home appliance. The control device can be a device with a central control function in the loT, such as a smart mobile terminal device installed with an application for managing and controlling smart home appliances, a smart central control device, or even an edge computing device in the loT or the like. The target information can be the registration information required for activation and binding, and the target network connection information is the information required for connecting to a network provided by the current environment that can be used for communication connection with the Internet.

Step 102, sending the target information and the target network connection information to the device that currently needs to be activated and bound.

The target network connection information is configured for enabling the device to access a target communication network corresponding to the target network connection information, and the target information is configured for enabling the device to implement activation and binding operation at a service device by the target communication network.

In the embodiment of the present application, the target information and the target network connection information are sent to the device that currently needs to be activated and bound, so that the device can access the target communication network corresponding to the target network connection information according to the target network connection information. As a result, the device can establish a communication connection with the corresponding service device of the activation and binding service by the target communication network, and activate and bind at the service device by the target information. In this way, achieving that the device is automatically connected to the target communication network, and the binding activation operation is actively performed after the device is comprised in the target communication network, thereby reducing the user's operations in the activation and binding process of the device, simplifying the user's operation process, improving the user's usage experience, and ensuring the activation and binding success rate of the device.

In the embodiment of the present application, after obtaining target information and target network connection information for activation and binding when detecting a to-be-activated and bound device needing to be activated and bound currently, sending the target information and the target network connection information to the device, so that after the device automatically accesses the target communication network by the target network connection information, the activation and binding operation is realized at the control device based on the target information. In this way, the control device actively sends the target network connection information and the target information to the detected device, so that the device actively performs activation and binding at the control device, thereby solving the problem of low binding activation success rate of loT devices, proposing a method for automatically realizing binding activation of loT devices, improving the binding activation success rate of loT devices, and ensuring the use of loT functions of loT devices.

Based on the above embodiments, the embodiment of the present application provides a control method, as shown in FIG. 2, the method is applied to a control device, and the method comprises the following steps.

Step 201, sending a first control message for indicating a target form for implementing the activation and binding operation by a preset communication form.

The preset communication form is a one-to-many communication form. The target form is a form corresponding to a near field communication mode.

In the embodiment of the present application, when the control device detects the device that currently needs to be activated and bound, the one-to-many communication mode is configured for sending a first control message for indicating a target form for implementing the activation and binding operation, so that the device supporting the target form can receive the first control message of the target form. The near field communication mode is a communication mode that can be supported by both the control device and the to-be-activated and bound device; for example, it can be an infrared communication mode, a Bluetooth communication mode, or even a voice control form, etc.

Step 202, in response to receiving a first response message sent by at least one first reference device, determining the device that currently needs to be activated and bound to be at least one first reference device.

The first response message is a message generated by the at least one first reference device without being activated or bound after receiving the first control message.

In the embodiment of the present application, at least one first reference device is a device that determines that it needs to perform an activation and binding operation after receiving a first control message, and therefore generates a corresponding first response message and sends it to the control device. At this time, at least one first reference device and the control device exchange information by the information transmission mode of the target form. After receiving the first response message sent by at least one first reference device, the control device determines that at least one first reference device needs to perform an activation and binding operation, and therefore determines the device that currently needs to be activated and bound to be at least one first reference device.

Step 203, obtaining the target information and the target network connection information for activation and binding in response to detecting the device that currently needs to be activated and bound.

In an embodiment of the present application, when the control device determines that there is a to-be-activated and bound device, the target information for activation and binding is obtained, such as user account information and target network connection information, such as at least comprising a network name and a network connection password. The user account information, network name and network connection password may be pre-stored in the control device, or may be obtained by the user inputting a prompt message generated when the control device determines that there is a to-be-activated and bound device.

Step 204, sending the target information and the target network connection information to the device.

The target network connection information is configured for enabling the to-be-activated and bound device to access a target communication network corresponding to the target network connection information, and the target information is configured for enabling the to-be-activated and bound device to implement activation and binding operation at a service device by the target communication network.

In the embodiment of the present application, since the to-be-activated and bound device is further connected to the target communication network, the control device still uses the communication mode of the target form to send the target information and the target network connection information to the to-be-activated and bound device. At this time, a one-to-one sending mode or a one-to-many sending mode can be used. The specific mode can be determined according to the actual situation and is not specifically limited here.

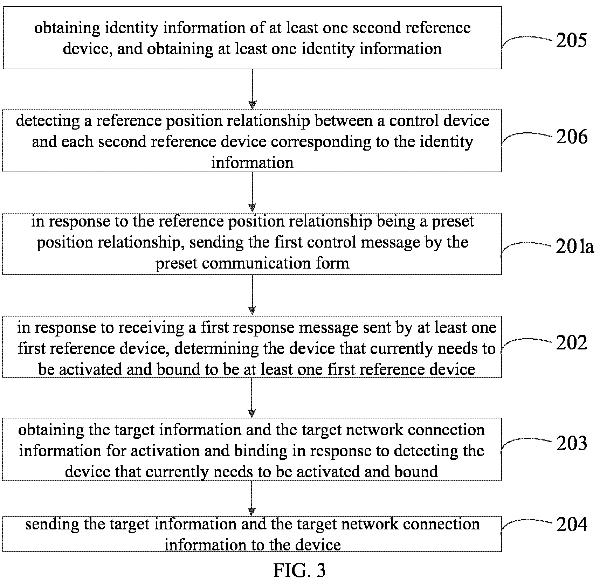

Based on the above embodiments, in other embodiments of the present application, referring to FIG. 3, before the control device executes step 201, it is further configured to execute step 205 to step 206.

Step 205, obtaining identity information of at least one second reference device, and obtaining at least one identity information.

In the embodiment of the present application, at least one second reference device is a device that needs to be added to the loT, and the identity information of at least one second reference device is the only identification information configured to identify the identity of each second reference device, such as the product serial number of each second reference device, the product name number of the second reference device, etc. The mode of the control device to obtain the identity information of at least one second reference device can be to generate a prompt message to prompt the user to enter manually, or can be obtained by other modes such as scanning a barcode, a Quick Response code, or other scannable code comprising the identity information of each second reference device.

Step 206, detecting a reference position relationship between a control device and the second reference device corresponding to each of the identity information.

In the embodiment of the present application, the control device can detect the reference position relationship between the control device and the second reference device corresponding to each of identity information by the positioning equipment. The reference position relationship can usually be represented by the distance relationship between the control device and each corresponding second reference device.

Correspondingly, step 201 can be implemented by step 201a.

Step 201a, in response to the reference position relationship being a preset position relationship, sending the first control message by the preset communication form.

In the embodiment of the present application, the preset position relationship can be a relationship within the preset distance range, that is, when the reference position relationship between the control device and the corresponding second reference device is the preset position relationship, a one-to-many communication mode such as a broadcast form is used to send the first control message of the target form so that the devices around the control device can receive the first control message.

Based on the above embodiment, in other embodiments of the present application, step 205 can be implemented by step 205a to step 205b.

Step 205a, starting an imaging apparatus of the control device.

In the embodiment of the present application, the control device starts the imaging apparatus of the control device, such as a camera.

Step 205b, scanning a graphic identification code of each of the second reference device with the imaging apparatus, and obtaining at least one identity information.

In the embodiment of the present application, the graphic identification code can be a barcode, a Quick Response code, etc. comprising the identity information of the second reference device. The control device prompts the user to scan and identify the barcode and/or Quick Response code of each second reference device by the started camera, thereby obtaining the identity information of each second reference device, and then obtaining the identity information of at least one second reference device.

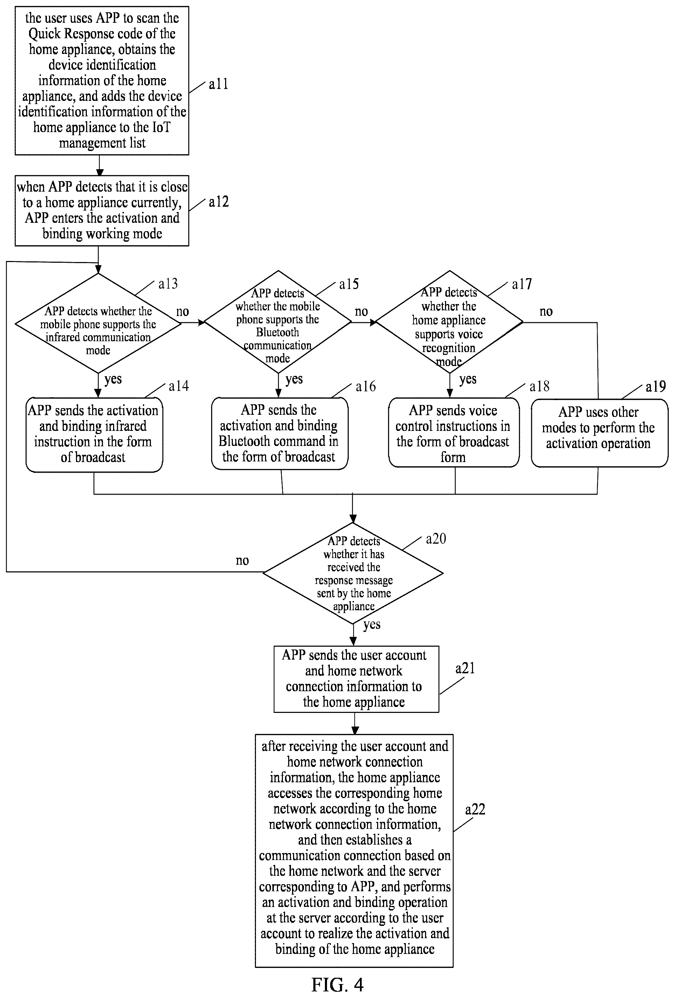

Based on the above embodiments, the embodiment of the present application provides a control method, which is described by taking the application scenario as a home and the control device as a mobile phone installed with a service application program (APP) for management and control as an example. The implementation process of the control method can refer to FIG. 4, comprising the following steps.

Step a11, the user uses APP to scan the Quick Response code of the home appliance, obtains the device identification information of the home appliance, and adds the device identification information of the home appliance to the loT management list.

Step a12, when APP detects that it is close to a home appliance currently, APP enters the activation and binding working mode.

Step a13, APP detects whether the mobile phone supports the infrared communication mode. If the mobile phone supports the infrared communication mode, executing step a14; otherwise, executing step a15.

Step a14, APP sends the activation and binding infrared instruction in the form of broadcast.

At this time, assuming that the home appliance supports the infrared communication mode.

Step a15, APP detects whether the mobile phone supports the Bluetooth communication mode. If the mobile phone supports the Bluetooth communication mode, executing step a16; otherwise, executing step a17.

Step a16, APP sends the activation and binding Bluetooth command in the form of broadcast.

At this time, assuming that the home appliance supports the Bluetooth communication mode.

Step a17, APP detects whether the home appliance supports voice recognition mode. If the home appliance supports voice recognition mode, executing step a18, otherwise, executing step a19.

At this time, assuming that APP has voice function.

Step a18, APP sends voice control instructions in the form of broadcast form.

Step a19, APP uses other modes to perform the activation operation.

Step a20, APP detects whether it has received the response message sent by the home appliance. If it has received the response message, executing step a21, otherwise executing step a13.

Step a21, APP sends the user account and home network connection information to the home appliance.

The user account corresponds to the aforementioned target information, and the home network connection information corresponds to the aforementioned target network connection information.

Step a22, after receiving the user account and home network connection information, the home appliance accesses the corresponding home network according to the home network connection information, and then establishes a communication connection based on the home network and the server corresponding to APP, and performs an activation and binding operation at the server according to the user account to realize the activation and binding of the home appliance.

The response message is the response message sent by the home appliance after receiving the activation and binding infrared instruction, the activation and binding Bluetooth instruction or the voice control instruction, and corresponds to the aforementioned first response message. The activation and binding infrared instruction, activation and binding Bluetooth instruction and voice control instruction correspond to the aforementioned first control message.

It should be noted that the description of the same steps and the same contents in this embodiment and other embodiments can refer to the description in other embodiments, and will not be repeated here.

In the embodiment of the present application, by obtaining target information and target network connection information for activation binding when detecting a to-be-activated and bound device needing to be activated and bound currently, and sending the target information and the target network connection information to the to-be-activated and bound device, so that after the to-be-activated and bound device automatically accesses the target communication network by the target network connection information, the activation and binding operation is realized at the control device based on the target information. In this way, the control device actively sends the target network connection information and the target information to the detected to-be-activated and bound device, so that the to-be-activated and bound device actively performs activation and binding at the control device, thus solving the problem of low binding activation success rate of loT devices, proposing a method for automatically realizing binding activation of loT devices, improving the binding activation success rate of IoT devices, and ensuring the use of loT functions of IoT devices.

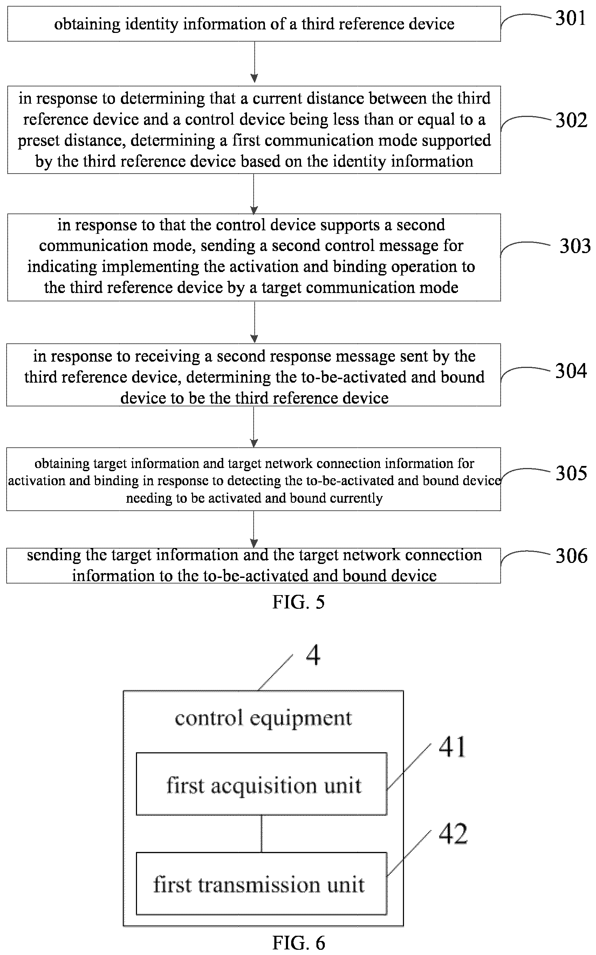

Based on the above-mentioned embodiments, the embodiment of the present application provides a control method, as shown in FIG. 5, the method is applied to a control device, and the method comprises the following steps.

Step 301, obtaining identity information of a third reference device.

In the embodiment of the present application, the process of the control device obtaining the identity information of the third reference device can be that after the control device generates prompt information, the user directly enters the identity information of the third reference device, or the user performs a control operation on the control device, and uses the camera of the control device to identify the image identification code such as a barcode or a Quick Response code set on the third reference device comprising the identity information of the third reference device.

Step 302, in response to determining that a current distance between the third reference device and being less than or equal to a preset distance, determining a first communication mode supported by the third reference device based on the identity information.

The first communication mode comprises at least one communication mode.

In the embodiment of the present application, the control device determines the current distance between the control device and the third reference device by the positioning apparatus. If the current distance between the control device and the third reference device is less than or equal to the preset distance, the identity information of several third reference devices is configured to determine the first communication mode supported by the third reference device. The third reference device may support multiple communication modes at the same time, for example, comprising at least one of infrared communication mode, Bluetooth communication mode, voice control mode, etc.

Step 303, in response to that the control device supports a second communication mode, sending a second control message for indicating implementing the activation and binding operation to the third reference device by a target communication mode.

The second communication mode is at least one communication mode in the first communication mode, and the target communication mode is one communication mode in the second communication mode.

In the embodiment of the present application, determining the second communication mode supported by the control device, and the second communication mode is at least one communication mode in the first communication mode. The control device selects one communication mode from the second communication mode, obtains the target communication mode, and uses the target communication mode to send the second control message to the third reference device. Exemplarily, if the target communication mode is the Bluetooth communication mode, the control device uses the Bluetooth communication mode to send the second control message to the third reference device.

Step 304, in response to receiving a second response message sent by the third reference device, determining the to-be-activated and bound device to be the third reference device.

The second response message is a message generated by the third reference device in response to the second control message.

In the embodiment of the present application, after receiving the second control message sent by the control device, the third reference device responds to the second control message, determines whether it has completed the activation and binding operation, obtains a determination result, and then determines whether to generate a second response message according to the determination result. If the determination result is that the activation and binding operation has not been performed, generating a second response message. If the determination result is that the activation and binding operation has been completed, no response message is generated, or generating an indication message indicating that the activation and binding has been completed. After generating the second response message, the third reference device sends the second response message to the control device. In this way, after receiving the second response message sent by the third reference device, the control device determines that the to-be-activated and bound device is the third reference device.

Step 305, obtaining target information and target network connection information for activation and binding in response to detecting the to-be-activated and bound device needing to be activated and bound currently.

Step 306, sending the target information and the target network connection information to the to-be-activated and bound device.

The target network connection information is configured for enabling the to-be-activated and bound device to access a target communication network corresponding to the target network connection information, and the target information is configured for enabling the to-be-activated and bound device to implement activation and binding operation at a service device by the target communication network.

It should be noted that the description of the same steps and the same contents in this embodiment and other embodiments can refer to the description in other embodiments, and will not be repeated here.

In the embodiment of the present application, after obtaining target information and target network connection information for activation and binding when detecting a to-be-activated and bound device needing to be activated and bound currently, sending the target information and the target network connection information to the to-be-activated and bound device, so that after the to-be-activated and bound device automatically accesses the target communication network by the target network connection information, the activation and binding operation is realized at the control device based on the target information. In this way, the control device actively sends the target network connection information and the target information to the detected to-be-activated and bound device, so that the to-be-activated and bound device actively performs activation and binding at the control device, thus solving the problem of low binding activation success rate of loT devices, proposing a method for automatically realizing binding activation of loT devices, improving the binding activation success rate of IoT devices, and ensuring the use of loT functions of IoT devices.

Based on the above-mentioned embodiment, the embodiment of the present application provides a control equipment, as shown in FIG. 6, the control equipment 4 may comprise a first acquisition unit 41 and a first transmission unit 42.

The first acquisition unit 41 is configured for obtaining target information and target network connection information for activation and binding in response to detecting a to-be-activated and bound device needing to be activated and bound currently.

The first transmission unit 42 is configured for sending the target information and the target network connection information to the to-be-activated and bound device. The target network connection information is configured to enable the to-be-activated and bound device to access a target communication network corresponding to the target network connection information, and the target information is configured to enable the to-be-activated and bound device to implement activation and binding operation at a service device by the target communication network.

In other embodiments of the present application, before the first acquisition unit, the equipment further comprises a first determination unit and a second transmission unit.

The second transmission unit is configured for sending a first control message for indicating a target form for implementing the activation and binding operation by a preset communication form.

The first determination unit is configured for determining the at least one first reference device to be the to-be-activated and bound device when receiving a first response message sent by at least one first reference device. The first response message is a message generated by the at least one first reference device without being activated or bound after receiving the first control message.

In other embodiments of the present application, before the second transmission unit, the equipment further comprises a second acquisition unit and a detection unit.

The second acquisition unit is configured for obtaining identity information of at least one second reference device, and obtaining at least one identity information.

The detection unit is configured for detecting a reference position relationship between a control device and each second reference device corresponding to each of the identity information.

Correspondingly, the first transmission unit is specifically configured to implement the following step:
in response to the reference position relationship being a preset position relationship, sending the first control message by the preset communication form.

In other embodiments of the present application, the first acquisition unit comprises a start module and a scan module.

The start module is configured for starting an imaging apparatus of the control device.

The scan module is configured for scanning a graphic identification code of each of the second reference device with the imaging apparatus, and obtaining at least one identity information.

In other embodiments of the present application, the preset communication form is a one-to-many communication form.

In other embodiments of the present application, the target form is a form corresponding to a near field communication mode.

In other embodiments of the present application, before the first acquisition unit, the equipment further comprises a third acquisition unit, a second determination unit and a third transmission unit.

The third acquisition unit is configured for obtaining identity information of a third reference device.

The second determination unit is configured for determining a first communication mode supported by the third reference device based on the identity information when determining that a current distance between the third reference device being less than or equal to a preset distance. The first communication mode comprises at least one communication mode.

The third transmission unit is configured for sending a second control message for indicating implementing the activation and binding operation to the third reference device by a target communication mode when determining that a control device supports a second communication mode. The second communication mode is at least one communication mode in the first communication mode, and the target communication mode is one communication mode in the second communication mode.

The second determination unit is further configured for determining the to-be-activated and bound device to be the third reference device when receiving a second response message sent by the third reference device. The second response message is a message generated by the third reference device in response to the second control message.

It should be noted that the specific implementation process of the information interaction between the unit and the module in this embodiment can refer to the implementation process in the control method provided in the corresponding embodiments of FIG. 1 to FIG. 3 and FIG. 5, which will not be repeated here.

In the embodiment of the present application, after obtaining target information and target network connection information for activation and binding when detecting a to-be-activated and bound device needing to be activated and bound currently, sending the target information and the target network connection information to the to-be-activated and bound device, so that after the to-be-activated and bound device automatically accesses the target communication network by the target network connection information, the activation and binding operation is realized at the control device based on the target information. In this way, the control device actively sends the target network connection information and the target information to the detected to-be-activated and bound device, so that the to-be-activated and bound device actively performs activation and binding at the control device, thus solving the problem of low binding activation success rate of loT devices, proposing a method for automatically realizing binding activation of loT devices, improving the binding activation success rate of IoT devices, and ensuring the use of loT functions of IoT devices.

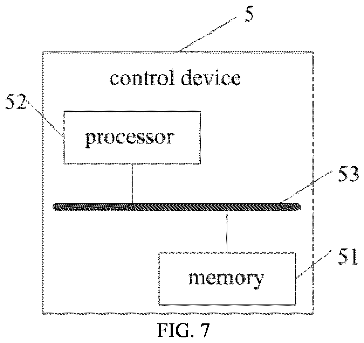

Based on the above embodiments, the embodiments of the present application provide a control device, as shown in FIG. 7, the control device 5 may comprise a memory 51, a processor 52 and a communication bus 53.

The memory 51 is configured for storing an executable instruction.

The communication bus 53 is configured for implementing a communication connection between the processor 52 and the memory 51.

The processor 52 is configured for executing a control program stored in the memory 51 to implement the control method shown in FIG. 1 to FIG.3 and FIG. 5, which will not be described in detail here.

Based on the above embodiments, the embodiments of the present application provide a computer-readable storage medium, referred to as storage medium, which stores one or more programs, and the one or more programs can be executed by one or more processors to realize the control method implementation process provided by the embodiments corresponding to FIG. 1 to FIG. 3 and FIG. 5, which will not be described in detail here.

It should be understood by those skilled in the art that the embodiments of the present application can be provided as methods, systems, or computer program products. Therefore, the present application can be in the form of hardware embodiments, software embodiments, or embodiments combining software and hardware. Moreover, the present application can be in the form of a computer program product implemented on one or more computer-usable storage media (comprising but not limited to disk memory and optical memory, etc.) containing computer-usable program code.

The present application is described with reference to the flowcharts and/or block diagrams of the methods, devices (systems), and computer program products according to the embodiments of the present application. It should be understood that each process and/or box in the flowchart and/or block diagram, as well as the combination of processes and/or boxes in the flowchart and/or block diagram, can be implemented by computer program instructions. These computer program instructions can be provided to a processor of a general-purpose computer, a special-purpose computer, an embedded processor or other programmable data processing device to produce a machine, so that the instructions executed by the processor of a computer or other programmable data processing device generate equipment for implementing the functions specified in one or more processes of the flowchart and/or one or more blocks of the block diagram.

These computer program instructions may also be stored in a computer-readable memory that can guide a computer or other programmable data processing device to work in a specific mode, so that the instructions stored in the computer-readable memory produce a product comprising an instruction device, which implements the functions specified in one or more processes of the flowchart and/or one or more boxes of the block diagram.

These computer program instructions may also be loaded onto a computer or other programmable data processing device, so that a series of operation steps are performed on the computer or other programmable equipment to produce computer-implemented processing, so that the instructions executed on the computer or other programmable equipment provide steps for implementing the functions specified in one or more processes of the flowchart and/or one or more boxes of the block diagram.

The above are only some embodiments of the present application and is not intended to limit the scope of the present application.

## Claims

1. A control method, **characterized by** comprising:
obtaining target information and target network connection information for activation and binding in response to detecting a device that currently needs to be activated and bound; and
sending the target information and the target network connection information to the device that currently needs to be activated and bound;
wherein the target network connection information is configured to enable the device that currently needs to be activated and bound to access a target communication network corresponding to the target network connection information, and the target information is configured to enable the device that currently needs to be activated and bound to implement an activation and binding operation at a service device by the target communication network.

2. The method according to claim 1, wherein before the obtaining the target information and the target network connection information for activation and binding in response to the detecting the device that currently needs to be activated and bound, the method further comprises:
sending a first control message for indicating a target form for implementing the activation and binding operation by a preset communication form; and
in response to receiving a first response message sent by at least one first reference device, determining the device that currently needs to be activated and bound to be the at least one first reference device;
wherein the first response message is a message generated by the at least one first reference device without being activated or bound after receiving the first control message.

3. The method according to claim 2, wherein before the sending the first control message for indicating the target form for implementing the activation and binding operation by the preset communication form, the method further comprises:
obtaining at least one identity information by obtaining identity information of at least one second reference device; and
detecting a reference position relationship between a control device and the second reference device corresponding to each of the identity information;
wherein the sending the first control message for indicating the target form for implementing the activation and binding operation by the preset communication form comprises:
in response to the reference position relationship being a preset position relationship, sending the first control message by the preset communication form.

4. The method according to claim 3, wherein the obtaining the at least one identity information by obtaining the identity information of the at least one second reference device comprises:
starting an imaging apparatus of the control device; and
scanning a graphic identification code of each of the second reference device with the imaging apparatus, and obtaining the at least one identity information.

5. The method according to claim 2 or 3, wherein the preset communication form is a one-to-many communication form.

6. The method according to claim 2 or 3, wherein the target form is a form corresponding to a near field communication mode.

7. The method according to claim 1, wherein before the obtaining the target information and the target network connection information for activation and binding in response to the detecting the device that currently needs to be activated and bound, the method further comprises:
obtaining identity information of a third reference device;
in response to determining that a current distance between the third reference device and being less than or equal to a preset distance, determining a first communication mode supported by the third reference device based on the identity information; wherein the first communication mode comprises at least one communication mode;
in response to determining that the control device supports a second communication mode, sending a second control message for indicating implementing the activation and binding operation to the third reference device by a target communication mode; wherein the second communication mode is at least one communication mode in the first communication mode, and the target communication mode is a communication mode in the second communication mode; and
in response to receiving a second response message sent by the third reference device, determining the device that currently needs to be activated and bound to be the third reference device; wherein the second response message is a message generated by the third reference device in response to the second control message.

8. A control equipment, **characterized by** comprising:
a first acquisition unit, configured for obtaining target information and target network connection information for activation and binding in response to detecting a device that currently needs to be activated and bound; and
a first transmission unit, configured for sending the target information and the target network connection information to the device that currently needs to be activated and bound ;
wherein the target network connection information is configured to enable the device that currently needs to be activated and bound to access a target communication network corresponding to the target network connection information, and the target information is configured to enable the device that currently needs to be activated and bound to implement an activation and binding operation at a service device by the target communication network.

9. A control device, **characterized by** comprising: a memory, a processor and a communication bus;
wherein the memory is configured for storing an executable instruction;
wherein the communication bus is configured for implementing a communication connection between the processor and the memory; and
wherein the processor is configured for executing a control program stored in the memory to implement a control method according to any one of claims 1 to 7.

10. A storage medium, wherein a control program is stored on the storage medium, and a control method according to any one of claims 1 to 7 is implemented when the control program is executed by a processor.
